Europäisches Patentamt

European Patent Office

Office européen des brevets

(11) Publication number: **0 361 334 B1**

# EUROPEAN PATENT SPECIFICATION

(45) Date of publication of patent specification: **01.12.93**

(51) Int. Cl.⁵: **C08G 18/28**, C08G 18/22, C08G 18/18, //(C08G18/28, 101:00)

(21) Application number: **89117582.0**

(22) Date of filing: **22.09.89**

The file contains technical information submitted after the application was filed and not included in this specification

(54) Process for making low density flexible polyurethane foams.

(30) Priority: **23.09.88 US 248710**

(43) Date of publication of application:
**04.04.90 Bulletin 90/14**

(45) Publication of the grant of the patent:
**01.12.93 Bulletin 93/48**

(84) Designated Contracting States:
**AT BE CH DE ES FR GB GR IT LI LU NL SE**

(56) References cited:
EP-A- 0 024 524          FR-A- 1 253 039
FR-A- 1 466 352          FR-A- 1 487 458
US-A- 3 457 203          US-A- 3 875 086
US-A- 4 426 461

(73) Proprietor: **THE DOW CHEMICAL COMPANY**
**2030 Dow Center,**
**Abbott Road**
**Midland, MI 48640(US)**

(72) Inventor: **Lehmann, Christian M.**
**Paradiesfeld 19**
**D-4410 Warendorf-2-Hoetmar(DE)**
Inventor: **Gansow, Michael A.P.**
**Am Blumenpfad 1**
**D-4048 Grevenbroith(DE)**

(74) Representative: **Huber, Bernhard, Dipl.-Chem.**
**et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08**
**20**
**D-81635 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

**Description**

This invention relates to flexible, molded and slabstock polyurethane foams and more particularly to a process for making unusually soft, flexible polyurethane foams of low density.

The published literature contains numerous examples where the problem of reducing the volume requirement of Freon®-11, blowing agent, has been addressed.

Replacement of Freon®-11 by alternative blowing agents, such as for example, Freon®R-21, R-22 and R-123 is taught by Patents JP 52/154,156-A, U.S. 4,636,529 A, and U.S. 4,076,644.

Complete replacement of the Freon®-11 blowing agent by non-fluorocarbon blowing agents is taught for example by Japanese Patent J 55/094,296 A, whereby a combination of dichloromethane and water are used to blow the foam. Similarly, U.S. Patent 4,264,744 A teaches the use of dichloromethane and selection of catalyst for replacing all or a part of the conventional fluorocarbon blowing agent in the preparation of soft foams.

All modifications taught to address the problem of replacing Freon®-11 as blowing agent for polyurethane foams in general follow the pattern of directly substituting the Freon®-11, at least in part, by an alternative volatile blowing agent. However, total reduction of Freon®-11 or alternative volatile blowing agent requirements can also be achieved when preparing foams by use of water alone. The water reacts with isocyanate leading to the generation of carbon dioxide which then expands the reacting mixture to give the cellular structure of the polymer.

While water can be used as the only blowing agent, the foams produced do not always exhibit the desired physical properties in comparison to those produced using halocarbon blowing agents, and they are, for example, harder and of poorer resilience.

It is therefore desirable to provide a process for the preparation of polyurethane foam which allows for reduced quantities of volatile blowing agents, such as Freon®-11, through the use of, for example, water and yet provide for equivalent or improved physical properties of the resulting low density foam.

Such a process can be provided by the use of mono-alcohols when preparing the foam. The use of mono-alcohols in the preparation of polyurethane foam is known in the art, but they have not been successfully employed as part of the polyol composition when preparing flexible polyurethane foam.

Mono-alcohols have been used to modify polyisocyanates which are then used in the preparation of polyurethanes. Japanese Patent JP 62/121,719 teaches the use of a mono-alcohol to modify a polyisocyanate composition used in the preparation of soft polyurethane foam in situations where heat adhesive properties to fibrous materials are required. Patent GB 2,188,055 which teaches the preparation of hydrophilic polyurethane foams from 1,6-hexamethylene diisocyanate modified by reaction with a mono-alcohol.

Mono-alcohols have been incorporated into polyol compositions used for preparing rigid polyurethane foam for the purpose of providing low viscosity formulations with good flow characteristics. U.S. Patent 4,715,746 teaches a polyol composition containing mono-alcohols of molecular weight 32 to 600, especially tertiary butanol or isobutanol, to provide permanent strengthening of geological formations in underground workings or mines. Similarly in the French Patent 2,312,520 polyglycol monoethers are used as viscosity depressants of polyol compositions required in the preparation of rigid and semi-rigid polyurethane foam. The reduced viscosity of the polyol mixture permits the high pressure continuous casting machines to operate without overheating.

Polyether mono-alcohols have also been incorporated into polyol compositions used to prepare polyurethane foam for their tenso-active, or surfactant, properties. Such is disclosed by, for example, U.S. Patent 3,457,203 and French patent FR-A-1,253,039.

U.S. Patent 3,405,077 teaches the use of mono-alcohols of hydroxyl equivalent weight from 74 to 150 in combination with polyether polyols for the preparation of soft polyurethane foams by reaction with polyisocyanates in the presence of trichlorofluoromethane and water. Similarly Canadian Patent 787,977 teaches the use of low molecular weight mono-alcohols for preparing soft polyurethane foam in the presence of mainly trichlorofluoromethane as the blowing agent.

The preparation of flexible slabstock polyurethane foam with polyol compositions containing monohydroxy polyether polyols of equivalent weights up to 719 is taught by Arceneaux et al, *Journal of Elastomers and Plastics*, p. 63, Vol. 14 (1982). They note an improvement in elongation properties but observe unacceptable load bearing, tear resistance, and compressive and tensile strength properties of the foams.

French patent 1,487,458 teaches the use of polyether mono-alcohols to enlarge the processing range for tin catalysts used in the preparation of polyurethane foam. Polyether mono-alcohols of molecular weight from 300 to 2,000 are present in from 5 to 25 weight percent of the polyol composition reacted with polyisocyanate to give a polyurethane foam.

It has now been found that flexible foams of excellent quality and good physical properties can be prepared by a process comprising reacting a polyisocyanate with a polyol composition containing at least two different hydroxyl compounds in the presence of trimerization catalyst and blowing agent characterized in that at least one hydroxyl compound is a polyol having a hydroxyl number of from 20 to 120; at least one of the hydroxyl compounds is a polyether mono-alcohol present in an amount of from 0.1 to 40 percent by weight of said polyol composition which has a molecular weight of from 800 to 3000; the trimerization catalyst is used in admixture with a urethane catalyst; and in that the blowing agent consists of water and optionally small, minor quantities of supplementary blowing agents, and wherein the trimerization catalyst is an alkali metal hydroxide, an alkali metal alkoxide, an alkali metal salt of a carboxylic acid, potassium carbonate, lead octoate, benzyl trimethylammonium hydroxide, 2-hydroxypropyltrimethylammonium formate, or 2-hydroxypropyltrimethylammonium 2-ethylhexoate, and wherein the urethane catalyst is a tertiary amine compound (including triethylenediamine, pentamethyldiethylenetriamine, N-methylmorpholine, N,N-dimethyl-N-aminoethylmorpholine and bis-(N,N-dimethylaminoethyl)ether and its formate salt.), an organometallic compound (including lead-2-ethylhexoate, lead benzoate, lead oleate, stannous octoate and stannous oleate), ferric chloride or stannic chloride.

The soft polyurethane foams thus prepared by reacting polyisocyanates with polyol compositions containing polyether mono-alcohol compounds in the presence of trimerization catalyst and water as blowing agent exhibit foam properties comparable to those foams prepared using conventional polyol compositions and CFC blowing agents.

The components utilized in the process for preparing the flexible polyurethane and polyisocyanurate foam in accordance with the present invention include a polyether mono-alcohol which is used in admixture with, for example, at least one polyol, an organic polyisocyanate, catalysts, surfactant, blowing agent and other additives such as fillers, dyes, flame retardants and internal mold release agents.

The Polyether Mono-alcohol

A mono-alcohol for the purpose of this invention is defined as a compound which has one active hydrogen-containing group per molecule which can be observed by procedures such as the Zerewitinoff test described by Kohler in the *Journal of the American Chemical Society*, p. 3181, Vol. 49 (1927). Representative of active hydrogen-containing groups as observed by the Zerewitinoff test are -OH, -COOH, -SH and -NHR where R is a hydrogen or a substituent which is not an active group as determined by the test method, such as, for example, methyl, ethyl, cyclohexyl and phenyl. The substituent group itself may contain active hydrogens.

Polyether mono-alcohols can be prepared by reacting a mono-hydric initiator with an alkylene oxide. Examples of suitable initiators include aliphatic, cycloaliphatic or aromatic monohydric alcohols having 1 to 12 carbon atoms, and aliphatic, cycloaliphatic or aromatic ethers, of monoether glycols having 2 to 6 carbon atoms in the glycol moiety, and dimethyl, -ethyl, -propyl or -butyl ethers of triols such as glycerol and trimethylolpropane. The monohydric initiator may be employed separately or in combination with other monohydric initiators. The mono-hydric initiator may also be combined with a polyol initiator, which on reaction with an alkylene oxide results in a polyether mono-alcohol being prepared in admixture with a polyol. Exemplary of a polyol initiator is glycerine. The preferred monohydric initiators comprise, for example, methanol, ethanol, propanol, butanol, alkylene oxide adducts of methanol and monoethers of di- and triethylene or -propylene glycols such as those sold by The Dow Chemical Company under the trademark Dowanol and includes products such as Dowanol EM, Dowanol DM, Dowanol TPM, and Dowanol PM glycol ethers.

The above monohydric initiators may be reacted with an alkylene oxide such as ethylene oxide, 1,2-propylene oxide, 1,2-butylene oxide, 2,3-butylene oxide, styrene oxide, or mixtures of two or more suitable oxides using techniques known to those skilled in the art of preparing polyether polyols. Suitable processes for the preparation of polyalkylene polyether polyols have been disclosed by Wurtz in 1859, *The Encyclopaedia of Chemical Technology*, Vol. 7, pp. 257-266, published by Interscience Publishers Inc. (1951) and U.S. Patent 1,922,459. The preferred alkylene oxides for reaction with the monohydric initiator comprise ethylene oxide, propylene oxide and butylene oxide. The alkylene oxides used in the reaction are employed separately or in combination in such quantities so as to obtain the desired molecular weight of polyether mono-alcohol. When oxides are used in combination, the distribution of oxide in the oxyalkylene chain of the product can be in a random or a block manner or combination of either manner so as to provide products containing primary or secondary end hydroxyl groups.

3

The choice of catalyst used in the preparation of the polyether mono-alcohols is well-known to those skilled in the art of preparing polyether polyols. Preferred catalysts are compounds of the group I and group II metals of the Periodic Table comprising for example sodium hydroxide, potassium hydroxide and potassium methoxide.

The polyether mono-alcohols are those having a molecular weight of from 800 to 3000, and preferably from 1000 to 2000. By way of illustration and not limitation, examples of such mono-alcohols are those which may be prepared by the reaction of triethylene glycol monomethylether with a mixed oxide feed comprising ethylene oxide from 5 to 15 percent by weight and at least 50 percent by weight propylene oxide to give a product with a molecular weight ranging from 1300 to 1500 and having essentially secondary hydroxyl groups. Triethylene glycol monomethylether may also be reacted with a mixed feed comprising ethylene oxide and at least 50 percent propylene oxide and then further reacted with from 1 to 10 percent by total weight of oxide, ethylene oxide to give a product of molecular weight ranging from 1400 to 1600 and containing approximately 20 to 60 percent primary hydroxyl groups.

Similarly, for example, a product may be prepared by reacting a mixed oxide feed comprising ethylene oxide and at least 50 percent by weight propylene oxide and then further reacting from 1 to 10 percent by total weight of oxide, of ethylene oxide with an initiator mixture comprising the monohydric initiator, diethylene glycol monomethylether and at least 50 percent by weight of total initiator present including the monohydric initiator, of glycerine to give a product of molecular weight ranging from 1400 to 1600 and containing approximately 20 to 60 percent primary hydroxyl groups.

The polyether mono-alcohol component of the polyol composition is present in an amount sufficient to provide measurably softer foams than those prepared in the absence of the mono-alcohol component, this being an amount of from 0.1 to 40, preferably from 10 to 30 and more preferably from 15 to 30 percent by weight of the total polyol composition comprising the mono-alcohol and polyol. Amounts larger than these result in products with undesirable properties such as power tear resistance. For the purpose of this invention, the mono-alcohol component of the polyol composition is defined as that component which is intentionally added in preparing the polyol composition and not that which may be present as an impurity in the polyol component. Exemplary of such an impurity can be an alkoxylated allyl alcohol which can be present due to the thermal rearrangement of propylene oxide to allyl alcohol and its subsequent alkoxylation, during the preparation of a polyether polyol.

The Polyol

Any of the polyols having a hydroxyl number of from 20 to 120 used in the preparation of flexible polyurethane foams can be employed in the practice of this invention. Suitable polyols are polyester polyols and addition products of alkylene oxides with polyhydric compounds having from 2 to 8 active hydrogen-containing groups per molecule. Examples of polyhydric compounds that are suitable as starting materials for making the addition products comprise water, glycerol, trimethylolpropane, pentaerythritol, hexanetriol, hexitol, heptitol, sorbitol, mannitol, sucrose and amine compounds, for example, ethylene diamine and aminoethylpiperazine, and mixtures of two or more such compounds. The alkylene oxide adducts of the polyhydric initiator can be prepared using techniques well-known to those skilled in the art of preparing polyether polyols.

Preferred polyols for this invention are the addition products of alkylene oxides with polyhydric compounds having from 2 to 4 active hydrogen-containing groups per molecule and wherein the addition product preferably has a hydroxyl number of from 20 to 80.

The polyol component of the polyol composition can comprise one or a plurality of polyols. It is preferred that the polyol composition comprises at least one polyether polyol which is nominally three-functional. Optionally, the polyol composition may contain a polyether polyol that contains from 20 to 90 and preferably from 40 to 90 percent primary hydroxyl groups, based on its total hydroxyl content. A representative example of such a polyether polyol may be glycerine which is alkoxylated with one or a combination of alkylene oxides including ethylene oxide, in a block or random manner so as to provide a polyether polyol containing from 20 to 90, and preferably from 40 to 90 percent primary hydroxyl and having a hydroxyl number of from 20 to 120.

The polyol component of the polyol composition is present in an amount of from 60 to 99.9, preferably from 70 to 90 and more preferably from 70 to 85 percent by weight of the total polyol composition comprising polyol and polyether mono-alcohol.

4

## The Polyisocyanate

Polyisocyanates which may be used in the present invention include aromatic, aliphatic and cycloaliphatic polyisocyanates and combination thereof. Representative examples are diisocyanates such as m-phenylene diisocyanate, 2,4-toluene diisocyanate, 2,6-toluene diisocyanate, mixtures of 2,4-toluene diisocyanate and 2,6-toluene diisocyanate, hexamethylene diisocyanate, tetramethylene diisocyanate, 1,4-cyclohexane diisocyanate, hexahydrotoluene diisocyanate, 1,5-naphthalene diisocyanate, 1-methoxy-2,4-phenylene diisocyanate, 2,4-diphenylmethane diisocyanate, 4,4'-diphenylmethane diisocyanate and mixtures, 4,4'-biphenylene diisocyanate, 3,3'-dimethoxy-4,4'-biphenyl diisocyanate, 3,3'-dimethyl-4,4'-biphenyl diisocyanate, 3,3'-dimethyl-4,4'-diphenylmethane diisocyanate.

Polyisocyanates and/or prepolymers, including those modified prior to reacting with the polyol composition may also be employed within the scope of the invention. Especially useful, and preferred, due to their availability and properties are the toluene diisocyanates, 4,4'-diphenylmethane diisocyanate, 2,4'-diphenylmethane diisocyanate and polymethylene polyphenyl polyisocyanate, commonly referred to as "crude MDI." The preferred polyisocyanates can be used alone or in combinations when reacting with the polyol composition.

The polyol composition is advantageously reacted with an organic polyisocyanate such that the mole ratio of isocyanate groups of the polyisocyanate to the active hydrogen-containing groups of the polyol composition including the water is from 0.8:1 to 1.3:1, and preferably from 0.9:1 to 1.25:1. At lower ratios of polyisocyanate, inadequate curing is achieved, and at higher ratios, the desirable foam physical properties are not achieved. It is noted that the optimum amount of polyisocyanate varies somewhat with the prevailing weather conditions, particularly temperature and humidity. In conditions of high humidity, isocyanate consumption is greater and so slightly larger ratios of isocyanate are required to produce foams of good quality at a constant ratio.

## The Catalysts

In the process of this invention, polyurethane foam is prepared by reacting a polyisocyanate with a polyol composition in the presence of a trimerization catalyst used in admixture with an urethane catalyst.

Catalysts which promote the trimerization of isocyanate with itself are known as trimerization catalysts. Those to be used in this invention are the ones defined in claim 1. Such catalysts include benzyl trimethylammonium hydroxide, the N-hydroxypropyl trimethylammonium salt of formic acid, alkali metal hydroxides such as potassium hydroxide, the alkali metal alkoxides such as sodium methoxide, the alkali metal acid salts of carboxylic acids, particularly the saturated aliphatic monocarboxylic acids having from 1 to 12 carbon atoms, such as sodium acetate, potassium acetate, potassium 2-ethylhexoate, potassium adipate and sodium benzoate;

Further exemplary trimerization catalysts are lead octoate, potassium glutamate, potassium acetate, sodium acetate and potassium carbonate. It is preferred to use trimerization catalysts which are blocked or delayed-action catalysts, as this allows for better control of the system reactivity in addition to improving the foam quality, especially softness. Such blocked or delayed-action catalysts generally are not immediately active to a significant degree in the process of the reaction and only become active during the process of the reaction. The catalysts may become active during the reaction by, for example, thermal decomposition due to the reaction exotherm. Catalysts which are recognized as being blocked or delayed-action trimerization catalysts which may be used in this invention are 2-hydroxypropyltrimethylammonium 2-ethylhexoate and 2-hydroxypropyltrimethylammonium formate.

Urethane catalysts are substances which promote the formation of urethane linkages from the reaction of an isocyanate with an active hydrogen-containing compound. There are three general types of urethane catalysts which are; tertiary amine compounds, organometallic compounds and salts of acids, preferably weak acids. Suitable tertiary amine compounds for use as urethane catalysts either alone or in combination are N-alkylmorpholine, N-alkylalkanolamine, N,N-dialkylcyclo-hexylamines and alkylamines where the alkyl groups include methyl, ethyl, propyl and butyl. Organometallic and metallic compounds useful as urethane catalysts include those of bismuth, lead, tin, titanium, iron, antimony, uranium, cadmium, cobalt, thorium, aluminum, mercury, zinc, nickel, cerium, molybdenum, vanadium, copper, manganese and zirconium. Exemplary of which are lead-2-ethylhexoate, lead benzoate, lead oleate, dibutyltin dilaurate, tributyl tin butyl tin trichloride, stannic chloride, stannous octoate, stannous oleate, dibutyltin di(2-ethylhexoate) and ferric chloride.

Certain urethane catalysts are known to show some selectivity towards promoting the reaction of isocyanate with the active hydrogen-containing compound, water. These catalysts are known by the term urethane blowing catalysts, due to the associated generation of nascent carbon dioxide. Such catalysts which may be used according to the invention are triethylenediamine, pentamethyldiethylenetriamine N,N-dimethyl-N-aminoethylmorpholine and bis-(N,N-dimethylaminoethyl)ether and its formate salt. Urethane and urethane blowing catalysts can be used in combination when preparing polyurethane foams.

In one of the preferred embodiments of the invention, the blocked or delayed-action trimerization catalyst is used in combination with urethane catalysts, where at least one of the urethane catalysts is a urethane blowing catalyst and can be a blocked or delayed-action blowing catalyst. The urethane blowing catalyst can be advantageously used to improve the curing of the foam. The preferred urethane catalysts are tertiary amines, a mixture of two or more tertiary amines, or a mixture of one or more tertiary amines with one or more organo metal catalysts, particularly an organic tin compound. Exemplary of the preferred urethane catalysts are stannous octoate, triethylenediamine, pentamethyldiethylenetriamine, N-methylmorpholine, N,N-dimethyl-N-aminoethylmorpholine and bis-(N,N-dimethylaminoethyl)ether and its formate salt.

In the preparation of the polyurethane foams, the catalyst is employed in a catalytically effective amount. The trimerization catalyst is employed in an amount sufficient to give a desired system reactivity and more especially softness of foam. Increasing amounts of trimerization catalyst provide for softer foam exhibiting lower compressive load deflection values. The trimerization catalyst is advantageously employed in an amount of from 0.01 to 1.0, and preferably from 0.05 to 0.5 part by weight per 100 parts by weight of polyol composition. When the urethane catalyst is an amine, it is advantageously used in an amount of from 0.05 to 5.0, preferably from 0.1 to 2.0 parts by weight per hundred parts of polyol composition. When the urethane catalyst is an organometallic or metallic compound, it is advantageously used in smaller amounts of from 0.01 to about 1.0 parts by weight per hundred parts of polyol composition.

One or more trimerization catalysts can be employed with one or more urethane catalysts. Trimerization catalysts may also be replaced to a small extent with catalysts which catalyze carbodiimide formation such as, for example, a 3-alkyl phospholene oxide and other such like compounds as disclosed in U.S. Patent 4,424,288.

## The Blowing Agent

In the preparation of polyurethane foams according to the present invention, the blowing agent consists of water and optionally small, minor quantities of supplementary blowing agents (CFC's or other volatile organic liquids) when it is to the benefit of the desired foam properties. Supplementary blowing agents useful in the preparation of isocyanate derived foams are well-known in the art and reference is made thereto for the purpose of the present invention.

Suitable supplementary blowing agents include liquids or liquefied gases which vaporize at or below the reaction conditions (i.e., temperature and pressure created by the exothermic reaction). In general the liquids and the liquefied gases advantageously employed are materials having a boiling point of from -80°C to 100°C, preferably from 0°C to 75°C. Representative supplementary blowing agents useful herein include the halogenated, preferably the chlorinated and/or the fluorinated hydrocarbons such as tetrafluoromethane, bromotrifluoromethane, chlorotrifluoromethane, dibromodifluoromethane, dichlorodifluoromethane, trichlorofluoromethane, hexafluoroethane, 1,2,2-trichloro-1,1,2-trifluoroethane, 1,1,2,2-tetrachloro-1,2-difluoroethane, 1,2-dibromo-1,1,2,2-tetrafluoroethane, 1,2,2-tribromo-1,1,2-trifluoroethane, octafluoropropane, decafluorobutane, hexafluorocyclopropane, 1,2,3-trichloro-1,2,3-trifluorocyclopropane, octafluorocyclobutane, 1,2-dichloro-1,2,3,3,4,4-hexafluorocyclobutane, 1,2,3,4-tetrachloro-1,2,3,4-tetrafluorocyclobutane, trichloroethylene, trichloroethane, chloroform, dichloroethane, carbon tetrachloride and low boiling hydrocarbons including alkanes and/or alkenes such as, for example, butane, pentane and hexane.

In the preferred embodiment of this invention the blowing agent for the preparation of soft flexible foam is carbon dioxide generated from the reaction of isocyanate with water. The water is generally used in an amount of from 1 to 10 parts by weight per 100 parts by weight of polyol composition. Sufficient amounts of blowing agent are used to give foams of the desired densities. The water generated carbon dioxide accounts for the major portion of the blowing agent required to produce foam of the desired density. Preferred supplementary blowing agents are the chlorofluorocarbons containing at least one hydrogen atom. Such preferred supplementary blowing agents are frequently identified as "soft" chlorofluorocarbons.

## The Surfactant

The reaction mixture may also contain a surfactant or stabilizer or other cell size control agent. Such materials are well-known in the art and reference is made thereto for the purpose of the present invention.

6

In general, representative of such foam surfactants are alkoxysilanes, polysilylphosphonates, polydimethylsiloxanes, the condensates of ethylene oxide with a hydrophobic base formed by condensing propylene oxide with propylene glycol, the alkylene oxide adducts of ethylenediamine, and the polyoxyalkylene esters of long chain fatty acids and sorbitan, and (siloxaneoxyalkylene) block copolymers. Preferred of such materials are the siloxaneoxyalkylene block copolymers. Such block copolymers are described in U.S. Patents 2,834,748; 2,917,480; 3,505,377; 3,507,815; 3,563,924 and 4,483,894.

Examples of suitable surfactants are the "Tegostab®" products Tegostab®B-4113, B-4380, and B-8681 sold by Goldschmidt and the surfactant DC-5043, sold by Dow Corning Corporation. Examples of suitable stabilizers are Tegostab® BF-2270, BF-2370, BF-4900 and B-3136 sold by Goldschmidt and the Dow Corning Corporation products DC-190 and DC-198. The foam stabilizer, surfactant is generally employed in amounts of from 0.05 to 5.0, preferably from 0.1 to 2.0, parts by weight per one hundred parts of hydroxyl compounds of the polyol composition.

## The Additives

In addition to the above-described components, the foam-forming mixture can optionally contain any of a variety of additives commonly employed in the preparation of flexible urethane foams. Representative additives include fire-retardant agents, fillers, dyes, pigments, anti-oxidizing agents and fungicides. Cross-linkers used to modify foam properties can also be incorporated in the reacting mixture. Representative cross-linkers are alkylamines, diamines, glycerine and diethanolamine.

## Preparation of Flexible Foam

The components as just described may be employed to produce soft flexible polyurethane and polyisocyanurate foam. The polyol composition comprising the polyether mono-alcohol and polyol components is reacted with an appropriate amount of organic polyisocyanate in the presence of other ingredients such as, for example, a blowing agent, catalysts, surfactant, additives, fillers or mixtures thereof.

The flexible foams prepared here may be made in a one-step process by reacting all the ingredients together at once or foams can be made by the so-called "quasi-prepolymer method." In the one-shot process, where foaming is carried out in machines, the active hydrogen-containing products, catalysts, surfactants, blowing agents and optional additives may be introduced through separate pipes to the mixing head where they are combined with the polyisocyanate to give the polyurethane-forming mixture. The mixture may be poured or injected into a suitable container or mold as required. For use of machines with a limited number of component lines into the mixing head, a premix of all the components except the polyisocyanate (and supplementary blowing agent when a gas is used) to give a polyol formulation, can be advantageously employed. This simplifies the metering and mixing of the reacting components at the time the polyurethane-forming mixture is prepared.

Alternatively, the foams may be prepared by the so-called "quasi-prepolymer method." In this method a portion of the polyol component is reacted in the absence of catalysts with the polyisocyanate component in proportion so as to provide from 10 percent to 30 percent of free isocyanato groups in the reaction product based on the weight of prepolymer. To prepare foam, the remaining portion of the polyol is added and the components are allowed to react together in the presence of catalysts and other appropriate additives such as, for example, blowing agent and surfactant. Other additives may be added to either the prepolymer or remaining polyol or both prior to the mixing of the components, whereby at the end of the reaction a flexible polyurethane foam is provided.

In any event, the urethane-isocyanurate foams prepared in accordance with this invention are flexible products advantageously having densities of from 6 to 500, preferably from 6 to 200 and more preferably from 6 to 100 kilograms per cubic meter. The foams can exhibit properties equivalent to or better than comparative foams prepared using environmentally harmful blowing agents.

Such foams as prepared by the process according to the invention are used, for example, as upholstery materials, mattresses, packing materials, films for laminating purposes and as insulating materials.

The process according to the invention is illustrated, but not intended to be limited, by the following experiments. Unless otherwise specified, all quantities are in parts by weight.

In the examples, the properties of the foams were determined in accordance with the following standard test procedures: resilience - ASTM D 3574-81, modulus and compressive load deflection - (CLD) DIN 53577, tensile strength and elongation - DIN 53571, tear resistance - DIN 53515.

The following abbreviations are employed in the examples:

Polyol A is an ethylene oxide, propylene oxide adduct of glycerine having an hydroxyl number of 55, and a primary OH content of 40 percent.

Polyol B is an ethylene oxide, propylene oxide adduct of glycerine having an hydroxyl number of 35, and a primary OH content of 82 percent.

Polyether Mono-alcohol A is a mixed feed ethylene oxide,propylene oxide adduct of triethylene glycol monomethyl ether having a hydroxyl number of 37.5, molecular weight 1400.

Urethane Catalysts

| | |
|---|---|
| NIAX®A1: | bis(dimethylaminoethyl)ether sold by Union Carbide Corp. |
| Sn-oct: | stannous octoate |
| DABCO®33 LV: | triethylenediamine 33 percent in dipropylene glycol sold by Air Products |
| DABCO®XDM: | N,N-dimethylethyl-N-morpholine sold by Air Products |
| NMM: | N-methylmorpholine |

Trimerization Catalysts

| | |
|---|---|
| Catalyst A: | potassium carbonate, 10g/100g water |
| DABCO®TMR:: | 2-hydroxypropyltrimethylanmonium 2-ethylhexoate sold by Air Products |
| DABCO®TMR-2: | 2-hydroxypropyltrimethylammonium formate sold by Air Products |

Surfactants

| | |
|---|---|
| Tegostab®BF 2370: | silicone surfactant sold by Th. Goldschmidt |
| Tegostab®BF4900: | silicone surfactant sold by Th. Goldschmidt |
| Freon®R-11 A: | trichlorofluoromethane sold by Dupont, a supplementary blowing agent |
| DEA: | diethanolamine, a crosslinking agent |

For all experiments, the polyisocyanate employed is an 80:20 mixture of the 2,4- and 2,6-toluene diisocyanate isomers.

Comparative Examples A to D

The comparative foams are prepared employing the indicated products and formulations as shown in Table 1.

Foam properties are indicated in Table 2.

The modulus value indicated in Table 2 is the ratio:

$$\frac{CLD \ at \ 65\%}{CLD \ at \ 25\%}$$

The larger the value, the greater the load bearing support offered by the foam.

The guide factor given in Table 2 can be calculated according to the following equation:

$$\frac{CLD \ at \ 40\% \ (Kpa)}{Foam \ density \ (Kg/M^3)} \ x \ 10 \ .$$

The guide factor may be considered as a normalized hardness and allows for comparison of different foam samples where there may be variation in densities. The lower the value, the softer the foam.

Comparative Examples A to D illustrate respectively the foam properties obtained when Freon-11 is used in blowing the foam, the change and loss in foam properties when using only water as the blowing agent, and the comparative foam properties when water blowing is combined with either a foam prepared in the presence of a mono-alcohol or trimerization catalyst.

TABLE 1

| Formulation | A* | B* | C* | D* |
|---|---|---|---|---|
| Polyol A | 100 | 100 | 85.75 | 100 |
| Mono-alcohol A | / | / | 14.25 | / |
| Tegostab®BF2370 | 1.5 | 1.5 | 1.5 | / |
| Tegostab®BF4900 | / | / | / | 1.1 |
| Sn-oct | 0.1 | 0.1 | 0.1 | 0.05 |
| NMM | 0.3 | 0.3 | 0.3 | / |
| NIAX® A1 | / | / | / | 0.04 |
| DABCO® 33LV | 0.3 | 0.3 | 0.3 | / |
| DABCO® XDM | / | / | / | 0.15 |
| DABCO® TMR | / | / | / | 0.1 |
| FREON®-11 | 6.0 | / | / | / |
| Water | 3.6 | 4.0 | 4.0 | 4.5 |
| Index | 100 | 100 | 100 | 100 |

*Not an example of this invention

Examples 1 to 4

In accordance with the process of this invention, foams are prepared in the presence of polyether mono-alcohols and trimerization catalysts. The products and formulations used to prepare the foams are shown in Table 3 and the properties of the products obtained in Table 4. As can be seen from Table 4, the soft flexible polyurethane foams prepared exhibit properties which are equivalent to or better than the comparative foams.

Example 2 displays foam properties equivalent to Comparative Example A and as seen from the guide factor is significantly softer.

TABLE 2

| Foam Properties | A* | B* | C* | D* |
|---|---|---|---|---|
| Density(Kg/M$^3$) | 25.7 | 25.8 | 25.5 | 25 |
| CLD at 40% (KPa) | 2.47 | 3.5 | 2.4 | 2.2 |
| Tensile Strength (KPa) | 123 | 182 | 117 | 140 |
| Elongation % | 260 | 320 | 290 | 250 |
| Tear Resistance (N/M) | 640 | 678 | 680 | 700 |
| Resilience % | 44 | 37 | 40 | / |
| Hysteresis % | 27.8 | 29.9 | 29.3 | 28.5 |
| Modulus | 2.17 | 2.15 | 2.35 | 2.4 |
| Guide factor | 0.96 | 1.35 | 0.95 | 0.88 |

*Not an example of this invention

Example 5

This example illustrates the increasing softness of the foam produced according to the process of the invention with the increasing quantity of trimerization catalyst. Foams are prepared according to the formulation of Example 2 (with trimerization catalyst levels as indicated below) Results are tabulated below.

| DABCO® TMR-2 (pphp) | Foam Density | CLD at 40% (KPa) | Guide Factor |
|---|---|---|---|
| 0.05 | 25 Kg/M$^3$ | 1.8 | 0.74 |
| 0.15 | 25 | 1.6 | 0.64 |
| 0.25 | 25 | 1.4 | 0.56 |
| pphp = parts per 100 parts total polyol composition | | | |

TABLE 3

| Formulation | 1 | 2 | 3 | 4 |
|---|---|---|---|---|
| Polyol A | 45 | 45 | 45 | 45 |
| Polyol B | 35 | 35 | 35 | 35 |
| Mono-alcohol A | 20 | 20 | 20 | 20 |
| Tegostab® BF2370 | / | 1.2 | 1.3 | 1.2 |
| Tegostab® BF4900 | 1.1 | / | / | / |
| Sn-oct | 0.08 | 0.08 | 0.08 | 0.08 |
| NIAX® A1 | 0.04 | 0.1 | 0.1 | 0.05 |
| DABCO® XDM | 0.15 | 0.15 | 0.3 | 0.05 |
| DABCO® TMR | 0.1 | / | / | / |
| DABCO® TMR-2 | / | 0.1 | / | / |
| Catalyst A | / | / | 0.1 | 0.1 |
| DEA | / | / | / | 0.2 |
| Water | 4.5 | 4.0 | 5.5 | 4.5 |
| Index | 100 | 100 | 81 | 100 |

TABLE 4

| Foam Properties | 1 | 2 | 3 | 4 |
|---|---|---|---|---|
| Density(Kg/M$^3$) | 25.0 | 28.3 | 23.1 | 28.3 |
| CLD at 40% (KPa) | 1.8 | 1.8 | 1.5 | 2.4 |
| Tensile Strength (KPa) | 85 | 92 | 80 | 108 |
| Elongation % | 230 | 250 | 240 | 240 |
| Resilience % | 44 | 44 | 39 | 48 |
| Hysteresis % | 29.7 | 29.2 | 29.3 | 31.4 |
| Modulus | 2.6 | 2.37 | 2.7 | 2.6 |
| Guide Factor | 0.72 | 0.63 | 0.65 | 0.84 |

**Claims**

**Claims for the following Contracting States : AT, BE, CH, DE, FR, GB, GR, IT, LI, LU, NL, SE**

1. A process for preparing a flexible polyurethane foam comprising reacting a polyisocyanate with a polyol composition containing at least two different hydroxyl compounds in the presence of trimerization catalyst and blowing agent characterized in that at least one hydroxyl compound is a polyol having a hydroxyl number of from 20 to 120; at least one of the hydroxyl compounds is a polyether mono-alcohol present in an amount of from 0.1 to 40 percent by weight of said polyol composition which has a molecular weight of from 800 to 3000; the trimerization catalyst is used in admixture with a urethane catalyst; and in that the blowing agent consists of water and optionally small, minor quantities of supplementary blowing agents, and wherein the trimerization catalyst is an alkali metal hydroxide, an alkali metal alkoxide, an alkali metal salt of a carboxylic acid, potassium carbonate, lead octoate, benzyl trimethylammonium hydroxide, 2-hydroxypropyltrimethylammonium formate, or 2-hydroxypropyltrimethylammonium 2-ethylhexoate, and wherein the urethane catalyst is a tertiary amine compound (including triethylenediamine, pentamethyldiethylenetriamine, N-methylmorpholine, N,N-dimethyl-N-aminoethylmorpholine and bis-(N,N-dimethylaminoethyl)ether and its formate salt.), an organometallic compound (including lead-2-ethylhexoate, lead benzoate, lead oleate, stannous octoate and stannous oleate), ferric chloride or stannic chloride.

2. A process as claimed in claim 1 wherein the polyol is a polyether polyol and is a reaction product of one or more alkylene oxides with an initiator which bears from two to eight active hydrogen-containing groups per molecule.

3. A process as claimed in claim 1 wherein the mono-alcohol is a reaction product of one or more alkylene oxides with an initiator which bears one active hydrogen-containing group per molecule.

4. A process as claimed in claim 1 wherein water is present in an amount of from 1 to 10 parts by weight per 100 parts by weight of said polyol composition.

5. A process as claimed in claim 1 wherein the trimerization catalyst is a delayed-action catalyst.

6. A process as claimed in claim 1 wherein the urethane catalyst includes at least one urethane blowing catalyst.

7. A soft flexible polyurethane foam being prepared according to the process of claim 1 and wherein the amount of polyisocyanate is sufficient to provide a mole ratio of isocyanate groups to active hydrogen-containing groups of the polyol composition, including water, in the range of from 0.8:1 to 1.3:1.

8. A soft flexible polyurethane foam as claimed in claim 7 wherein the polyisocyanate comprises toluene diisocyanate.

9. A soft flexible polyurethane foam as claimed in claim 7 wherein the polyisocyanate comprises polymethylene polyphenyl isocyanate.

**Claims for the following Contracting State : ES**

1. A process for preparing a flexible polyurethane foam comprising reacting a polyisocyanate with a polyol composition containing at least two different hydroxyl compounds in the presence of trimerization catalyst and blowing agent characterized in that at least one hydroxyl compound is a polyol having a hydroxyl number of from 20 to 120; at least one of the hydroxyl compounds is a polyether mono-alcohol present in an amount of from 0.1 to 40 percent by weight of said polyol composition which has a molecular weight of from 800 to 3000; the trimerization catalyst is used in admixture with a urethane catalyst; and in that the blowing agent consists of water and optionally small, minor quantities of supplementary blowing agents, and wherein the trimerization catalyst is an alkali metal hydroxide, an alkali metal alkoxide, an alkali metal salt of a carboxylic acid, potassium carbonate, lead octoate, benzyl trimethylammonium hydroxide, 2-hydroxypropyltrimethylammonium formate, or 2-hydroxypropyltrimethylammonium 2-ethylhexoate, and wherein the urethane catalyst is a tertiary amine compound (including triethylenediamine, pentamethyldiethylenetriamine, N-methylmorpholine, N,N-dimethyl-N-aminoethylmorpholine and bis-(N,N-dimethylaminoethyl)ether and its formate salt), an organometallic compound (including lead-2-ethylhexoate, lead benzoate, lead oleate, stannous octoate and stannous oleate), ferric chloride or stannic chloride.

2. A process as claimed in claim 1 wherein the polyol is a polyether polyol and is a reaction product of one or more alkylene oxides with an initiator which bears from two to eight active hydrogen-containing groups per molecule.

3. A process as claimed in claim 1 wherein the mono-alcohol is a reaction product of one or more alkylene oxides with an initiator which bears one active hydrogen-containing group per molecule.

4. A process as claimed in claim 1 wherein water is present in an amount of from 1 to 10 parts by weight per 100 parts by weight of said polyol composition.

**5.** A process as claimed in claim 1 wherein the trimerization catalyst is a delayed-action catalyst.

**6.** A process as claimed in claim 1 wherein the urethane catalyst includes at least one urethane blowing catalyst.

**7.** A process as claimed in claim 1 and wherein the amount of polyisocyanate is sufficient to provide a mole ratio of isocyanate groups to active hydrogen-containing groups of the polyol composition, including water, in the range of from 0.8:1 to 1.3:1.

**8.** A process as claimed in claim 7 wherein the polyisocyanate comprises toluene diisocyanate.

**9.** A process as claimed in claim 7 wherein the polyisocyanate comprises polymethylene polyphenyl isocyanate.

**Patentansprüche**
**Patentansprüche für folgende Vertragsstaaten : AT, BE, CH, DE, FR, GB, GR, IT, LI, LU, NL, SE**

**1.** Verfahren zur Herstellung eines flexiblen Polyurethanschaums, umfassend das Umsetzen eines Polyisocyanats mit einer Polyolzusammensetzung, die mindestens zwei verschiedene Hydroxylverbindungen enthält, in Gegenwart von Trimerisierungskatalysator und Treibmittel,
**dadurch gekennzeichnet,**
daß mindestens eine Hydroxylverbindung ein Polyol mit einer Hydroxylzahl von 20 bis 120 ist, mindestens eine der Hydroxylverbindungen ein in einer Menge von 0,1 bis 40 Gew.-% der Polyolzusammensetzung vorhandener Polyethermonoalkohol ist, der ein Molekulargewicht von 800 bis 3000 aufweist, der Trimerisierungskatalysator in Mischung mit einem Urethankatalysator verwendet wird und das Treibmittel aus Wasser und gegebenenfalls kleinen, geringen Mengen an zusätzlichen Treibmitteln besteht und worin der Trimerisierungskatalysator ein Alkalimetallhydroxid, ein Alkalimetallalkoxid, ein Alkalimetallsalz einer Carbonsäure, Kaliumcarbonat, Bleioctoat, Benzyltrimethylammoniumhydroxid, 2-Hydroxypropyltrimethylammoniumformiat oder 2-Hydroxypropyltrimethylammonium-2-ethylhexoat ist und worin der Urethankatalysator eine tertiäre Aminverbindung (einschließlich Triethylendiamin, Pentamethyldiethylentriamin, N-Methylmorpholin, N,N-Dimethyl-N-aminoethylmorpholin und Bis-(N,N-dimethylaminoethyl)ether und sein Formiatsalz), eine organometallische Verbindung (einschließlich Blei-2-ethylhexoat, Bleibenzoat, Bleioleat, Zinn(II)octoat und Zinn(II)oleat), Eisen(III)chlorid oder Zinn(IV)chlorid ist.

**2.** Verfahren nach Anspruch 1, worin das Polyol ein Polyetherpolyol ist und ein Reaktionsprodukt von einem oder mehreren Alkylenoxiden mit einem Initiator ist, der 2 bis 8 aktiven Wasserstoff enthaltende Gruppen pro Molekül trägt.

**3.** Verfahren nach Anspruch 1, worin der Monoalkohol ein Reaktionsprodukt von einem oder mehreren Alkylenoxiden mit einem Initiator ist, der eine aktiven Wasserstoff enthaltende Gruppe pro Molekül trägt.

**4.** Verfahren nach Anspruch 1, worin Wasser in einer Menge von 1 bis 10 Gew.-Teilen pro 100 Gew.-Teile der Polyolzusammensetzung vorhanden ist.

**5.** Verfahren nach Anspruch 1, worin der Trimerisierungskatalysator ein Katalysator mit verzögerter Wirkung ist.

**6.** Verfahren nach Anspruch 1, worin der Urethankatalysator mindestens einen Urethan-Schäumungskatalysator enthält.

**7.** Weicher, flexibler Polyurethanschaum, hergestellt nach dem Verfahren gemäß Anspruch 1 und worin der Anteil von Polyisocyanat ausreichend ist, um ein Molverhältnis von Isocyanatgruppen zu aktiven Wasserstoff enthaltenden Gruppen der Polyolzusammensetzung einschließlich Wasser im Bereich von 0,8 : 1 bis 1,3 : 1 zu ergeben.

EP 0 361 334 B1

**8.** Weicher, flexibler Polyurethanschaum nach Anspruch 7, worin das Polyisocyanat Toluoldiisocyanat umfaßt.

**9.** Weicher, flexibler Polyurethanschaum nach Anspruch 7, worin das Polyisocyanat Polymethylenpolphenylisocyanat umfaßt.

**Patentansprüche für folgenden Vertragsstaat : ES**

**1.** Verfahren zur Herstellung eines flexiblen Polyurethanschaums, umfassend das Umsetzen eines Polyisocyanats mit einer Polyolzusammensetzung, die mindestens zwei verschiedene Hydroxylverbindungen enthält, in Gegenwart von Trimerisierungskatalysator und Treibmittel,
**dadurch gekennzeichnet,**
daß mindestens eine Hydroxylverbindung ein Polyol mit einer Hydroxylzahl von 20 bis 120 ist, mindestens eine der Hydroxylverbindungen ein in einer Menge von 0,1 bis 40 Gew.-% der Polyolzusammensetzung vorhandener Polyethermonoalkohol ist, der ein Molekulargewicht von 800 bis 3000 aufweist, der Trimerisierungskatalysator in Mischung mit einem Urethankatalysator verwendet wird und das Treibmittel aus Wasser und gegebenenfalls kleinen, geringen Mengen an zusätzlichen Treibmitteln besteht und worin der Trimerisierungskatalysator ein Alkalimetallhydroxid, ein Alkalimetallalkoxid, ein Alkalimetallsalz einer Carbonsäure, Kaliumcarbonat, Bleioctoat, Benzyltrimethylammoniumhydroxid, 2-Hydroxypropyltrimethylammoniumformiat oder 2-Hydroxypropyltrimethylammonium-2-ethylhexoat ist und worin der Urethankatalysator eine tertiäre Aminverbindung (einschließlich Triethylendiamin, Pentamethyldiethylentriamin, N-Methylmorpholin, N,N-Dimethyl-N-aminoethylmorpholin und Bis-(N,N-dimethylaminoethyl)ether und sein Formiatsalz), eine organometallische Verbindung (einschließlich Blei-2-ethylhexoat, Bleibenzoat, Bleioleat, Zinn(II)octoat und Zinn(II)oleat), Eisen(III)chlorid oder Zinn(IV)chlorid ist.

**2.** Verfahren nach Anspruch 1, worin das Polyol ein Polyetherpolyol ist und ein Reaktionsprodukt von einem oder mehreren Alkylenoxiden mit einem Initiator ist, der 2 bis 8 aktiven Wasserstoff enthaltende Gruppen pro Molekül trägt.

**3.** Verfahren nach Anspruch 1, worin der Monoalkohol ein Reaktionsprodukt von einem oder mehreren Alkylenoxiden mit einem Initiator ist, der eine aktiven Wasserstoff enthaltende Gruppe pro Molekül trägt.

**4.** Verfahren nach Anspruch 1, worin Wasser in einer Menge von 1 bis 10 Gew.-Teilen pro 100 Gew.-Teile der Polyolzusammensetzung vorhanden ist.

**5.** Verfahren nach Anspruch 1, worin der Trimerisierungskatalysator ein Katalysator mit verzögerter Wirkung ist.

**6.** Verfahren nach Anspruch 1, worin der Urethankatalysator mindestens einen Urethan-Schäumungskatalysator enthält.

**7.** Verfahren nach Anspruch 1, worin der Anteil an Polyisocyanat ausreichend ist, um ein Molverhältnis von Isocyanatgruppen zu aktiven Wasserstoff enthaltenden Gruppen der Polyolzusammensetzung einschließlich Wasser im Bereich von 0,8 : 1 bis 1,3 : 1 zu ergeben.

**8.** Verfahren nach Anspruch 7, worin das Polyisocyanat Toluoldiisocyanat umfaßt.

**9.** Verfahren nach Anspruch 7, worin das Polyisocyanat Polymethylenpolyphenylisocyanat umfaßt.

**Revendications**
**Revendications pour les Etats contractants suivants : AT, BE, CH, DE, FR, GB, GR, IT, LI, LU, NL, SE**

**1.** Procédé de préparation d'une mousse souple de polyuréthane, comprenant la réaction d'un polyisocyanate avec une composition de polyol renfermant au moins deux composés hydroxylés différents, en présence d'un catalyseur de trimérisation et d'un agent d'expansion, **caractérisé** en ce qu'au moins un composé hydroxylé est un polyol ayant un indice d'hydroxyle de 20 à 120, au moins l'un des

13

composés hydroxylés est un polyéther-monoalcool qui est présent en une proportion de 0,1 à 40 % en poids par rapport au poids de ladite composition de polyol et qui a une masse moléculaire de 800 à 3000, le catalyseur de trimérisation est utilisé en mélange avec un catalyseur d'uréthane et l'agent d'expansion est constitué d'eau et éventuellement de quantités faibles, mineures, d'agents d'expansion supplémentaires, le catalyseur de trimérisation étant un hydroxyde de métal alcalin, un alcoolate de métal alcalin, un sel de métal alcalin d'un acide carboxylique, le carbonate de potassium, l'octoate de plomb, l'hydroxyde de benzyltriméthylammonium, le formiate de 2-hydroxypropyltriméthylammonium ou le 2-éthylhexoate de 2-hydroxypropyltriméthylammonium, et le catalyseur d'uréthane étant une amine tertiaire (y compris la triéthylènediamine, la pentaméthyldiéthylènetriamine, la N-méthylmorpholine, la N,N-diméthyl-N-aminoéthylmorpholine et le bis(N,N-diméthylaminoéthyl)éther et son formiate), un composé organométallique (y compris le 2-éthylhexoate de plomb, le benzoate de plomb, l'oléate de plomb, l'octoate stanneux et l'oléate stanneux), le chlorure ferrique ou le chlorure stannique.

2.  Procédé selon la revendication 1, dans lequel le polyol est un polyéther-polyol et est un produit résultant de la réaction d'un ou plusieurs oxydes d'alkylène avec un amorceur qui porte deux à huit groupes à hydrogène actif par molécule.

3.  Procédé selon la revendication 1, dans lequel le monoalcool est un produit résultant de la réaction d'un ou plusieurs oxydes d'alkylène avec un amorceur qui porte un groupe à hydrogène actif par molécule.

4.  Procédé selon la revendication 1, dans lequel l'eau est présente en une quantité de 1 à 10 parties en poids pour 100 parties en poids de ladite composition de polyol.

5.  Procédé selon la revendication 1, dans lequel le catalyseur de trimérisation est un catalyseur à action retardée.

6.  Procédé selon la revendication 1, dans lequel le catalyseur d'uréthane comprend au moins un catalyseur d'uréthane à expansion.

7.  Mousse souple, molle, de polyuréthane, préparée par le procédé selon la revendication 1, pour laquelle la quantité de polyisocyanate est suffisante pour fournir un rapport molaire des groupes isocyanate aux groupes à hydrogène actif de la composition de polyol, y compris ceux de l'eau, compris dans l'intervalle allant de 0,8:1 à 1,3:1.

8.  Mousse souple, molle, de polyuréthane selon la revendication 7, pour laquelle le polyisocyanate comprend du toluène-diisocyanate.

9.  Mousse souple, molle, de polyuréthane selon la revendication 7, pour laquelle le polyisocyanate comprend du polyméthylène-polyphényl-polyisocyanate

**Revendications pour l'Etat contractant suivant : ES**

1.  Procédé de préparation d'une mousse souple de polyuréthane, comprenant la réaction d'un polyisocyanate avec une composition de polyol renfermant au moins deux composés hydroxylés différents, en présence d'un catalyseur de trimérisation et d'un agent d'expansion, **caractérisé** en ce qu'au moins un composé hydroxylé est un polyol ayant un indice d'hydroxyle de 20 à 120, au moins l'un des composés hydroxylés est un polyéther-monoalcool qui est présent en une proportion de 0,1 à 40 % en poids par rapport au poids de ladite composition de polyol et qui a une masse moléculaire de 800 à 3000, le catalyseur de trimérisation est utilisé en mélange avec un catalyseur d'uréthane et l'agent d'expansion est constitué d'eau et éventuellement de quantités faibles, mineures, d'agents d'expansion supplémentaires, le catalyseur de trimérisation étant un hydroxyde de métal alcalin, un alcoolate de métal alcalin, un sel de métal alcalin d'un acide carboxylique, le carbonate de potassium, l'octoate de plomb, l'hydroxyde de benzyltriméthylammonium, le formiate de 2-hydroxypropyltriméthylammonium ou le 2-éthylhexoate de 2-hydroxypropyltriméthylammonium, et le catalyseur d'uréthane étant une amine tertiaire (y compris la triéthylènediamine, la pentaméthyldiéthylènetriamine, la N-méthylmorpholine, la N,N-diméthyl-N-aminoéthylmorpholine et le bis(N,N-diméthylaminoéthyl)éther et son formiate), un composé organométallique (y compris le 2-éthylhexoate de plomb, le benzoate de plomb, l'oléate de plomb, l'octoate stanneux et l'oléate stanneux), le chlorure ferrique ou le chlorure stannique.

2. Procédé selon la revendication 1, dans lequel le polyol est un polyéther-polyol et est un produit résultant de la réaction d'un ou plusieurs oxydes d'alkylène avec un amorceur qui porte deux à huit groupes à hydrogène actif par molécule.

3. Procédé selon la revendication 1, dans lequel le monoalcool est un produit résultant de la réaction d'un ou plusieurs oxydes d'alkylène avec un amorceur qui porte un groupe à hydrogène actif par molécule.

4. Procédé selon la revendication 1, dans lequel l'eau est présente en une quantité de 1 à 10 parties en poids pour 100 parties en poids de ladite composition de polyol.

5. Procédé selon la revendication 1, dans lequel le catalyseur de trimérisation est un catalyseur à action retardée.

6. Procédé selon la revendication 1, dans lequel le catalyseur d'uréthane comprend au moins un catalyseur d'uréthane à expansion.

7. Procédé selon la revendication 1, dans lequel la quantité de polyisocyanate est suffisante pour fournir un rapport molaire des groupes isocyanate aux groupes à hydrogène actif de la composition de polyol, y compris ceux de l'eau, compris dans l'intervalle allant de 0,8:1 à 1,3:1.

8. Procédé selon la revendication 7, dans lequel le polyisocyanate comprend du toluène-diisocyanate.

9. Procédé selon la revendication 7, dans lequel le polyisocyanate comprend du polyméthylène-polyphényl-polyisocyanate.